# EUROPEAN PATENT APPLICATION

(11) **EP 4 358 563 A1**
(43) Date of publication of application: **24.04.2024**
(21) Application number: 23161150.0
(22) Date of filing: 10.03.2023
(51) Int. Cl.: H04W 12/50, H04R 25/00, G09B 21/00, H04W 84/18, H04W 12/63

(54) **METHOD AND SYSTEM FOR TRANSMITTING AUDIO SIGNALS**

(71) Applicant: Sonova AG, 8712 Stäfa (CH)
(72) Inventor: Pattisapu, Prakash, 8712 Staefa (CH); Dickmann, Georg, 8123 Ebmatingen (CH); Ferrari, Federico, 6900 Lugano (CH); El-Hoiydi, Amre, 2000 Neuchâtel (CH); Kasilov, Oleksiy, 3027 Bern (CH); Oesch, Yves, 2000 Neuchâtel (CH); Candela, Mauro, 1785 Cressier (CH)
(74) Representative: Schwan Schorer & Partner mbB

(57) **Abstract**

There is provided a method of providing assistive listening to a plurality of users (30) of audio receiver devices (10) configured to receive broadcast Bluetooth LE Audio streams (60), comprising: providing a plurality of audio source devices (50) configured to broadcast Bluetooth LE Audio streams and a plurality of Bluetooth LE Audio Broadcast Assistant devices (20); providing the Bluetooth LE Audio Broadcast Assistant devices with a common Bluetooth identity; pairing or bonding each audio receiver device with one of the Bluetooth LE Audio Broadcast Assistant devices to obtain pairing or bonding information; sharing all pairing or bonding information concerning each audio receiver device that has been obtained by any of the Bluetooth LE Audio Broadcast Assistant devices among the Bluetooth LE Audio Broadcast Assistant devices; and using one of the Bluetooth LE Audio Broadcast Assistant devices for directing at least one of the audio receiver devices to one of the audio source devices for enabling the audio receiver device to receive a broadcast Bluetooth LE Audio stream from said one of the audio source devices in an audio session.

## Description

The invention relates to a method and a system for providing assistive listening to a plurality of users of audio receiver devices, such as students wearing hearing devices in a classroom, configured to receive a broadcast Bluetooth LE Audio stream from an audio source device, such as a wireless microphone arrangement used by a teacher in a classroom.

A typical application for assistive listening systems is an educational facility with a plurality of classrooms, with a teacher using a wireless microphone in each classroom for broadcasting the teacher's voice via an audio link, such as Bluetooth LE Audio, to the hearing devices of hearing impaired students in the same classroom.

Operation of such assistive listening systems requires that the hearing devices of a student in classroom listens to a certain audio broadcasting device, namely the teacher's wireless microphone, during a certain time period, namely as long as the wireless microphone of the teacher broadcasts an audio stream for the student's class. To this end, the hearing devices of the student have to be provided with the appropriate information necessary for connecting with the teacher's wireless microphone, for example, the broadcast ID of the wireless microphone and, if using encrypted broadcasts, the encryption key (broadcast code). It also has to be taken into account that the students may use hearing devices of different brands/types, what means that no assumptions can be made about their behavior apart from behavior specified by the Bluetooth Hearing Aid Profile and dependent specifications. Further, the use of the assistive listening system should be convenient for the students and the teachers. Also the limited storage space of the hearing devices for pairing entries should be taken into account. Finally, since an educational facility may have adjacent classrooms that are within the coverage of a single broadcast microphone, it needs to be ensured that only the students present in a given classroom listen to the broadcast stream sent by the teacher in that classroom.

WO 2014/094877 A1 relates to an assistive listening system utilizing a proprietary wireless protocol wherein two wireless devices of the system may pair upon user operation of a switch when the two devices are in close proximity with each other, in particular within 1 m.

US 2006/0274747 A1 relates to an example of a wireless communication network for audio devices and other electronics, using, for example, a Bluetooth protocol or UWB communications.

US 8,543,709 B2 relates to an assistive listening system to be used, for example, at schools, wherein the wireless devices may be configured by a control unit to dynamically form groups of connected devices.

It is an object of the invention to provide for a method and a system for providing assistive listening to a plurality of users of audio receiver devices configured to receive a broadcast Bluetooth LE Audio stream from an audio source device selected from a plurality of audio source devices, which can be easily implement and can be used in convenient manner, while ensuring a respective audio receiver device always listens to the right audio stream.

According to the invention, these objects are achieved by a method as defined in claim 1 and a system as defined in claim 15, respectively.

The invention is beneficial in that, by providing all Bluetooth LE Audio Broadcast Assistant devices with a common Bluetooth identity and sharing all pairing or bonding information concerning each audio receiver device that has been obtained by any of the Bluetooth LE Audio Broadcast Assistant devices among all Bluetooth LE Audio Broadcast Assistant devices, it is sufficient to pair or bond each audio receiver device only once with one of the Bluetooth LE Audio Broadcast Assistant devices, while the resulting pairing or bonding information can be used by any of the Bluetooth LE Audio Broadcast Assistant devices for connecting the respective audio device with any one of the audio source devices.

Thereby the system can be used in a convenient manner, without a need for any customizations of the Bluetooth LE Audio receiver devices. Rather, any Hearing Access Profile (HAP) compliant audio receiver device will be able to support this scheme.

The Bluetooth specifications define a Broadcast Assistant role. A device implementing that role can tell a device that implements the Scan Delegator Role to listen to a specific broadcast source and audio channel from that source, and it can provide the Broadcast code needed to decrypt an encrypted broadcast. Since the Scan Delegator Role is part of the Bluetooth standard, even arbitrary audio receiver devices, e.g., hearing devices, from different vendors, provided they implement the Bluetooth standard, may be controlled in this way. However, the device implementing the Broadcast Assistant Role needs to be paired with the hearing device. If a hearing device had to pair with multiple devices that implement the Broadcast Assistant Role, repeated execution of the pairing procedure would be a burden to the users and the capacity of the pairing tables of hearing devices may quickly be exceeded. This issue is addressed by the present solution by providing a common Bluetooth identity for the devices which may implement the Broadcast Assistant Role.

For example, a common Bluetooth identity can be achieved by assignment of a common Identity Resolving Key (IRK) or by a common public Bluetooth address.

According to one example, the pairing or bonding of each audio receiver device with one of the Bluetooth LE Audio Broadcast Assistant devices may occur on enrollment of the user of the audio receiver device in a user database.

For example, the pairing or bonding information of the audio receiver device of a user may be associated with metainformation specific to the user. In particular, the user specific metainformation comprises the name of the user and the association of the user with a certain group of users, and optionally in addition type and/or transmit power of the audio receiver device.

According to one example, the pairing or bonding information of the audio receiver device of a user may be distributed to all Bluetooth LE Audio Broadcast Assistant devices together with the user specific metainformation. In particular, the pairing or bonding information of the audio receiver device of a user, together with the user specific metainformation, may be distributed to a user interface device which instructs one of the Bluetooth LE Audio Broadcast Assistant devices to direct at least one of the audio receiver devices to one of the audio source devices for enabling the audio receiver device to receive said broadcast Bluetooth LE Audio stream. For example, the at least one of the audio receiver devices may be manually selected via the user interface device.

According to one example, the pairing or bonding information of each audio receiver device may be distributed from that one of the Bluetooth LE Audio Broadcast Assistant devices that has been paired or bonded with the respective audio receiver device to the other Bluetooth LE Audio Broadcast Assistant devices via at least one of wireless network transmission, in particular WiFi transmission, file transfer, and a portable device connectable to each Bluetooth LE Audio Broadcast Assistant device, e.g. via USB.

According to one example, before starting an audio session in a session room each audio receiver device of the users attending the audio session may be registered by one of the Bluetooth LE Audio Broadcast Assistant devices which is located in the session room or by a delegate proximity detection device which is located in the session room. In particular, the Bluetooth LE Audio Broadcast Assistant device located in the session room or the delegate proximity detection device may communicate the registered audio receiver devices to the other Bluetooth LE Audio Broadcast Assistant devices to automatically delete the audio receiver devices registered by said Bluetooth LE Audio Broadcast Assistant device from the audio receiver devices registered by any of the other Bluetooth LE Audio Broadcast Assistant devices.

For example, the Bluetooth LE Audio Broadcast Assistant device located in the session room or the delegate proximity detection device may register each audio receiver device of a user which is found to be present within a proximity zone around the Bluetooth LE Audio Broadcast Assistant device located in the session room or the delegate proximity detection device and which transmits pairing or bonding information to the Bluetooth LE Audio Broadcast Assistant device located in the session room or the delegate proximity detection device which is found to belong to the pairing or bonding information shared by all Bluetooth LE Audio Broadcast Assistant devices. In particular, the audio receiver devices may transmit the pairing or bonding information to the Bluetooth LE Audio Broadcast Assistant device located in the session room or to the delegate proximity detection device by transmitting Bluetooth Advertisements detected by the Bluetooth LE Audio Broadcast Assistant device located in the session room or the delegate proximity detection device.

For example, the Bluetooth LE Audio Broadcast Assistant device located in the session room or the delegate proximity detection device may determine whether or not the audio receiver device is in the proximity zone by at least one of:
determining whether or not the RSSI of the Bluetooth Advertisements received from the audio receiver device exceeds an RSSI threshold value;
determining whether or not the RSSI of the Bluetooth Advertisements received from the audio receiver device as a function of time meets with a predefined pattern;
determining whether or not a distance determined by channel sounding is below a given distance threshold; and
determining whether or not a distance determined by triangulation based on reception of Bluetooth Advertisements by multiple antennas of the Bluetooth LE Audio Broadcast Assistant device located in the session room or the delegate proximity detection device is below a given distance threshold.

In particular, the RSSI threshold may be a fixed predetermined value, or it may be calculated based on a path loss over the distance threshold of the proximity zone and a value of the transmit power of the audio receiver device.

In the latter case, the value of the transmit power may be a value associated with the specific type of audio receiver device, wherein the type of audio receiver device is determined at the time of said pairing or bonding of the audio receiver device with one of the Bluetooth LE Audio Broadcast Assistant devices. Alternatively, the value of the transmit power may be determined at the time of said pairing or bonding of the audio receiver device with one of the Bluetooth LE Audio Broadcast Assistant devices by calibration by positioning the audio receiver device at a known distance from the respective one of the Bluetooth LE Audio Broadcast Assistant device it is being paired or bonded with. According to a further alternative, the value of the transmit power may be transmitted from the audio receiver device to the Bluetooth LE Audio Broadcast Assistant device located in the session room or to the delegate proximity detection device.

According to one example, the delegate proximity detection device may communicate information as to which audio receiver devices were found to be present within the proximity zone to the Bluetooth LE Audio Broadcast Assistant device located in the session room.

According to one example, the proximity zone may be limited by a configurable distance threshold from the Bluetooth LE Audio Broadcast Assistant device located in the session room of the delegate proximity detection device above which the probability of proximity detection is below 10%. Alternatively, the proximity zone may be limited by a distance threshold which is from 10 cm to 100 cm from the Bluetooth LE Audio Broadcast Assistant device located in the session room or the delegate proximity detection device.

According to one example, each audio receiver device of the users attending the audio session may be registered by providing the Bluetooth LE Audio Broadcast Assistant device located in the session room with a session specific list of audio receiver devices selected from the user database. In particular, the session specific list of audio receiver devices may be manually selected from the user database.

According to one example, when an audio session in the session room is started by one of the audio source devices located in the session room starting to broadcast a Bluetooth LE Audio stream, the Bluetooth LE Audio Broadcast Assistant device located in the session room may:
connect with said audio source device and receives the broadcast code and the Broadcast ID of the audio source device from the audio source device, and
connect with the registered audio receiver devices, convey the broadcast code and the Broadcast ID of said audio source device to the registered audio receiver devices, and
instruct the registered audio receiver devices to start synchronizing to and rendering the broadcast Bluetooth LE Audio stream of said audio source device.

In particular, the Bluetooth LE Audio Broadcast Assistant device located in the session room may use the "Add Source" operation of the Broadcast Audio Scan Service to instruct the audio receiver devices to start synchronizing to the broadcast Bluetooth LE Audio stream.

According toa further example, the Bluetooth LE Audio Broadcast Assistant device located in the session room may use the "Set Broadcast_Code" operation of the Broadcast Audio Scan Service to convey the broadcast code of the audio source device to the audio receiver devices.

For example, the Bluetooth LE Audio Broadcast Assistant device located in the session room may remain permanently connected to the audio receiver devices during the streaming of the broadcast Bluetooth LE Audio stream to the audio receiver devices so as to monitor the synchronization state of the audio receiver devices with the audio source device. Alternatively, the Bluetooth LE Audio Broadcast Assistant device located in the session room may repeatedly reconnect to the audio receiver devices during the streaming of the broadcast Bluetooth LE Audio stream to the audio receiver devices so as to monitor the synchronization state of the audio receiver devices with the audio source device.

According to one example, the Bluetooth LE Audio Broadcast Assistant device located in the session room may restart synchronization of all of the registered audio receiver devices to the broadcast Bluetooth LE Audio stream which are found to have lost synchronization. In particular, the Bluetooth LE Audio Broadcast Assistant device located in the session room may restart synchronization of all of the registered audio receiver devices to the broadcast Bluetooth LE Audio stream which are found to have lost synchronization by using the "Add Source" of "Modify Source" operation of the Broadcast Audio Scan Service.

According to one example, the Bluetooth LE Audio Broadcast Assistant device located in the session room may provide the synchronization state of all of the registered audio receiver devices to a local or remote user interface.

According to one example, when an audio session in the session room is terminated by the audio source device terminating broadcasting of the Bluetooth LE Audio stream, the Bluetooth LE Audio Broadcast Assistant device located in the session room may take at least one of the following actions:
performing the "Remove Source" operation of the Broadcast Audio Scan Service with all audio receiver devices still within reach of the Bluetooth LE Audio Broadcast Assistant device located in the session room to avoid that audio receiver devices try to reconnect to the audio source device;
instructing the audio source device to generate a new broadcast code and/or change its Broadcast ID; and
annihilate the registration of the audio receiver devices of the audio session.

According to one example, the audio source devices may be designed as wireless microphones to be worn or held by a speaker for capturing the speaker's voice as the audio stream to be broadcast.

According to one example, at least one of the Bluetooth LE Audio Broadcast Assistant devices may be implemented in at least one of the audio source devices.

According to one example, the audio receiver devices may be hearing devices for stimulating the hearing of the user according to the audio stream received from the audio source device. In particular, the audio receiver devices may form part of binaural hearing systems.

Preferred embodiments of the invention are defined in the dependent claims.

Hereinafter, examples of the invention will be illustrated by reference to the attached drawings, wherein:
- Fig. 1: is a schematic illustration of an example of how a plurality of hearing devices of students can be mapped into a centralized database;
- Fig. 2: is a schematic illustration of an example of how the hearing devices of a student can be automatically registered when the student enters a classroom;
- Fig. 3: is a schematic illustration of an example of how the hearing devices of students that are in the class room can be manually registered; and
- Fig. 4: is a schematic illustration of an example of a use situation in a classroom when the audio receiver devices of the students in the classroom listen to a broadcast audio stream transmitted by a wireless microphone of a teacher.

A "hearing device" as used hereinafter is any ear level element suitable for reproducing sound by stimulating a user's hearing, such as an electroacoustic hearing aid, a bone conduction hearing aid, an active hearing protection device, a hearing prostheses element such as a cochlear implant, a wireless headset, an earbud, an earplug, an earphone, etc.

As far as Bluetooth LE is concerned, pairing and bonding are distinct items. In short, pairing is the exchange of security features each device has and creation of temporary encryption. Bonding is the exchange of long term keys after pairing has occurred, and storing those keys for later use. Pairing is not the creation of permanent security between devices, rather, that is called bonding. Pairing is the mechanism that allows bonding to occur.

"Pairing" is the exchange of security features, which includes things like I/O capabilities, requirement for man-in-the-middle protection, etc. Once this exchange is made, the security that will be used has been determined. Once the pairing feature exchange is complete, a temporary security key is exchanged and the connection is encrypted, but only using the temporary key. In this encrypted connection, long term keys are exchanged. These keys are things like the (long term) encryption key to encrypt a connection, and also things like an identity resolving key which is mapped to the identity of a device. The exact keys exchanged are determined by the security features of each device.

"Bonding" means that after the pairing features exchange and the connection has been encrypted (i.e., once pairing is completed), and keys have been exchanged, the devices store and use those keys the next time they connect. Keys can be exchanged using the bonding procedure, but that does not mean they are bonded if the keys are not stored and used the next time.

"Pairing tables" may hold persistently stored long term key and device identity information allowing for subsequent authentication and establishment of secure communication between two devices.

A "Broadcast Assistant device" as used hereinafter is a device that implements the 'Broadcast Assistant role' of the Bluetooth specifications. This role may be collocated with the "Broadcast Source role" in a single device.

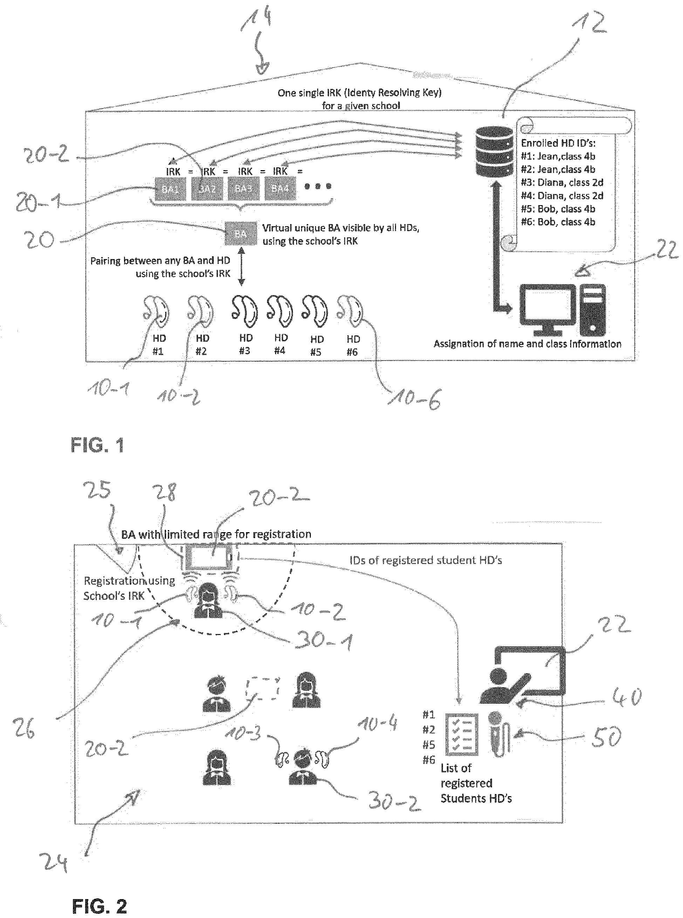

An example of an assistive listening system as used in an educational facility, such as a school, is illustrated in Figs. 1 to 4, each of which relates to another use situation. However, the use of assistive listening systems according to the invention is not limited to schools or other educational facilities; rather, such systems also could be used, for example, in conference or other meeting facilities, or in entertainment facilities.

Fig. 1 is a schematic illustration of an example of how a plurality of hearing devices 10-1 to 10-6 of students can be mapped into a centralized database 12 of a facility 14 (hereinafter referred to as "school").

For example, on enrollment of a student with the school, the two hearing devices 10-1, 10-2 of the student, which are provided with a wireless Bluetooth LE Audio interface and which may form a binaural hearing system, are paired with a Broadcast Assistant device ("BA device") 20-1 of the school having a wireless Bluetooth LE Audio interface. The pairing information resulting from such pairing process may be transferred to all other BA devices 20 in use by the school, for example, by wireless transmission, in particular wireless network transmission such as WiFi transmission, or other transfer methods, such as file transfer, , or a portable device (with a data memory) connectable to each BA device 20, e.g., via USB transmission. For example, the portable device could be one of the BA devices 20 or one of the teachers' microphones or a smartphone with an appropriate app. Alternatively, the hearing devices 10 may be bonded with the BA device 20-1 and the respective bonding information may be distributed among the other BA devices 20.

All BA devices 20 share the same identity, as it may be represented by the Bluetooth Identity Resolving Key IRK) or, alternatively, by a common public Bluetooth address. As a result, the pairing (or bonding) information generated from pairings (or bondings) with the student hearing devices 10 can be used by any of the BA devices 20.

At time of enrollment, the pairing information may be associated with a manually entered name of the student as well as other metainformation like the association with a specific class. This metainformation then may be distributed along with the pairing information to all BA devices 20.

All relevant data (personal data of the student, hearing device specific data, such as type/model of the hearing device and transmit power of the hearing device 10, pairing / bonding information, data specific for the BA devices 20, data specific for the audio source devices) may be stored in the central database 12.

The central database 12 may be accessed by terminal devices (or user interface devices) 22 and by the BA devices 20.

Fig. 2 is a schematic illustration of an example of how the hearing devices 10-1, 10-2 of a student 30-1 can be automatically registered when the student enters a classroom 24 in which a lesson is scheduled. A device placed at the entrance 25 of the classroom, which typically may be one of the BA devices 20 (such as the BA device 20-2 shown in Fig. 2), detects Bluetooth Advertisements transmitted by the hearing devices 10-1, 10-2 of the student 30-1. If these Advertisements can be associated with any of the known pairing entries (i.e., pairing information shared among the BA devices 20) of previously enrolled students 30 and if the student 30-1 is in close proximity to the BA device 20-2, i.e., within a proximity zone 26, this student 30-1 and her/his hearing devices 10-1, 10-2 will be considered as 'registered' for the scheduled lesson in the classroom, 24.

The functionality of the BA device 20-2 placed at the entrance 25 of the classroom 24 with regard to registration of the students 30 entering the classroom 24 (and their hearing devices 14) may be taken over by a delegate proximity detection device 28 (indicated by dashed lines in Fig. 2) which communicates with the BA device 20-2; this variant allows the BA device 20-2 to be placed in more central location in the classroom 24 (indicated by dashed lines in Fig. 2), i.e., within reach of all hearing devices 10 at the time when all students 30 are in their listening location on the classroom 24, such as at the ceiling, what may optimize connectivity of the BA device 20-2 with the registered hearing devices 10 in the classroom during a lesson. Thus, the function of a "proximity detection device" placed at the entrance 25 of the classroom 24 may be either implemented by a BA device 20 or by a respective delegate device. The delegate device 28 may communicate with the BA device 20-2 directly or via another device, such as the wireless microphone 50 of the teacher 40 or a user interface device 22.

According to one example, at least one of the Bluetooth LE Audio Broadcast Assistant devices 20 may be implemented in at least one of the audio source devices 50. For example, one of the BA devices 20 in a classroom 24 could be implemented by the audio source device 50 itself. Said differently, the audio source device 50 may also have a BA role. Such implementation may extend the range of the BA device located at the door for large classrooms by providing a "secondary" BA device implemented in the audio source device 50. Such "secondary" BA device cannot do the registration phase where the proximity detection is mandatory. But once the users 30 have been registered and the audio session starts in the classroom 24, the audio source device 50 might act as "secondary" BA device to ensure coverage of the full classroom 24.

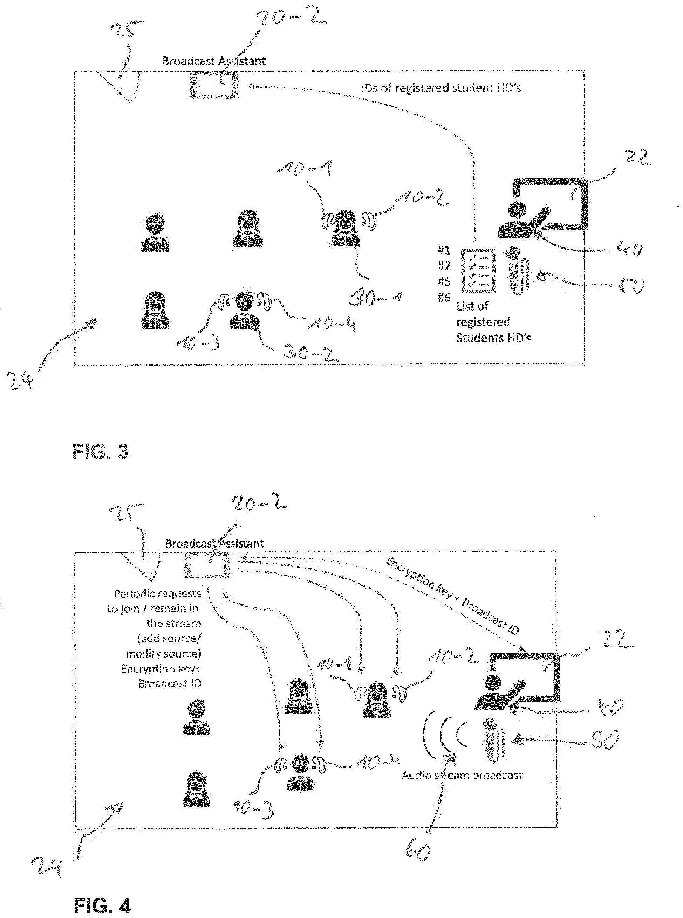

As an alternative to the above described automatic registration of the hearing devices 10 upon entry of the respective student into the classroom 24, the teacher 40 may select a preconfigured list of students 30 (and their hearing devices 10) that belong to a class or manually add students to the class by selecting the students 30 from the central database 12 containing the enrolled students 30 (the teacher 40 may use a user interface device 22 to this end). This alternative is illustrated in Fig. 3.

The pairing or bonding information of the audio receiver devices 10, together with the metainformation specific to the respective hearing device user 30, may be distributed to the user interface device 22, which then instructs one of the Bluetooth LE Audio Broadcast Assistant devices 20 in the classroom 24 to direct the registered or manually selected audio receiver devices 10 to the audio source device 50 for enabling the audio receiver devices 10 to receive the broadcast Bluetooth LE Audio stream.

According to one example, the devices which detect the proximity of students 30 upon entering a classroom 24, i.e., the BA devices 20 and/or the delegate devices 28 located in different classrooms, may communicate among each other so as to automatically remove a student 30, once having detected to be present in one classroom from the list of students registered for any other classroom.

The proximity zone 26 may be practically limited by a maximum distance from the proximity detection device (BA device 20-2 or delegate device 28) which may be, for example, from 10 cm to 100 cm.

According to one example, the proximity detection device may be configured to allow for different proximity zone settings to adapt the proximity detection device to a specific placement. For instance, if two proximity detection devices need to be placed in close vicinity, e.g. at two adjacent entrances to two different classrooms, a reduced proximity zone may be selected for each of the proximity detection devices in order to avoid false proximity detection i.e. to avoid overlap of the proximity zones. In some examples, a user may be presented by the proximity detection device with a choice of a "small distance range" having an upper limit of about 5 cm to 20 cm, a "reduced distance range" having an upper limit of about 0.5 m to 1.5 m, and a "standard distance range" having an upper limit of about 3 m to 5 m. In some examples, the proximity detection device may only be configured to allow for two different proximity zones as e.g. only the "reduced distance range" and the "standard distance range"..

There are multiple options of how the proximity of a student's hearing devices 10 to the proximity detection device 20-2 or 28 can be detected.

According to one example, proximity detection may be based on the Received Signal Strength (RSSI) of the advertisements received from the hearing devices 10. For example, it may be determined that proximity is given if the RSSI value exceeds a given fixed threshold value.

Alternatively, it may be determined that proximity is given if the RSSI value exceeds a previously determined threshold value. Such variable threshold value may be determined by one of the following methods: For example, the threshold value may be calculated based on a path loss over the maximal distance defining the proximity zone (which may be, for example a distance between 20 cm and 100cm, such 50 cm) and the transmit power of the hearing device 10. The transmit power may be known to the proximity detection device 20-2 or 28 from metainformation associated with the respective hearing device 10 (and stored in the central database 12 upon enrollment of the student 30 owning the respective hearing device 10) concerning the type/model of the hearing device 10 (as determined at the time of pairing upon enrollment). Alternatively, the transmit power may have been determined at time of pairing through calibration by positioning the hearing device 10 at a well-known distance from the BA device 20-1 it is paired with upon enrollment (also in this case, the transmit power may form part of the metainformation associated with the pairing information). According to a further alternative, the transmit power may be known from a transmit power information element of the hearing device, so as to send the value of the transmit power to the proximity detection device 20-2 or 28.

According to another example, the proximity detection device 20-2 or 28 may monitor the evolution of the RSSI value as a function of time and determine that proximity is given when the RSSI value as a function of time meets with a predefined pattern, for example, that the RSSI value is increasing while a student 30 is first getting closer to the proximity detection device 20-2 or 28, that the RSSI value remains at some peak while the student 30 is in front of the proximity detection device 20-2 or 28 and that the RSSI value getting weaker while the student 30 is moving away from the proximity detection device 20-2 or 28.

In practice, distance measurements may be quite inaccurate as long as the protocol used is not providing any specific hooks for it other than measuring the signal strength, such as RSSI. Therefore, even coarse distance measurement may be, in some cases, then limited to a maximum distance of e.g. 30 cm.

According to one example, the proximity zone 26 may be limited by a configurable distance threshold from the Bluetooth LE Audio Broadcast Assistant device 20-2, above which threshold the probability of proximity detection is below 10%. Such "probability approach" for detecting proximity is explained in detail, for example, in WO 2014/094877 A1 (this approach is based on the consideration that the likelihood of successful reception of wireless signals exchange between two devices decreases sharply with increasing distance between the two devices, so that the likelihood of successful signal reception can be used a measure for the distance).

According to a further example, the proximity detection device 20-2 or 28 may detect that proximity is given when a distance to the hearing device 10, which in one example may be determined by channel sounding, is below a given distance threshold (corresponding to the size of the proximity zone 26). Alternatively, the distance may be determined by triangulation based on reception of Bluetooth Advertisements from the hearing device 10 by multiple antennas of the proximity detection device 20-2 or 28.

Another alternative for proximity detection not relying on RSSI measurements may be Bluetooth positioning (https://www.bluetooth.com/blog/bluetooth-positioning-systems/), allowing to use features offered by the Bluetooth standard to measure relative positions of devices.

A still further alternative may be Ultra-Wideband technology (UWB), which is also an interesting technology when it comes to indoor positioning (see, e.g., https://www.inpixon.com/technology/standards/ultra-wideband).

Fig. 4 is a schematic illustration of an example of a use situation in a classroom 24 when the hearing devices 10 of the students 30 in the classroom 24 listen to a broadcast audio stream 60 transmitted by a wireless microphone 50 of the teacher 40.

When a lesson in the classroom 24 starts, transmission of a Bluetooth LE Audio broadcast audio stream 60 by a wireless microphone 50 used by the teacher 40 is initiated and the teacher's microphone 50 and the BA device 20-2 located in the classroom 24 exchange the encryption key (broadcast code) used by the microphone 50 and the identity (Broadcast ID) of the microphone 50. In some examples, additional information that describes the broadcast audio stream 60, e.g. an audio channel number in case the teacher's microphone 50 transmits multiple channels, may be exchanged.

The BA device 20-2 connects to the registered hearing devices 10 and uses the 'Add Source' operation of the Broadcast Audio Scan Service (BASS) to instruct the hearing devices 10 to start synchronizing to and rendering the broadcast audio stream 60 transmitted by the teacher's microphone 50, i.e. the hearing devices 10 are directed to the teacher's microphone 50 (in strict terms, a broadcast source and a broadcast sink do not connect, the source being unaware of the fact that a sink is listening). The BA device 20-2 uses the 'Set Broadcast_Code' operation of BASS to convey the encryption key (broadcast code) to the hearing devices 10.

In one example, the BA device 20-2 remains connected to all registered hearing devices 10 for monitoring the synchronization state of the hearing devices 10, so as to restart, in case a hearing device 10 is found to lose synchronization, synchronization using the 'Add Source' or 'Modify Source' operation of the BASS. The synchronization state of all registered hearing devices 10 may be exposed on a local or remote user interface 22 to the teacher 40. In case that the connection between the BA device 20-2 and one or more of the hearing devices 10 is found to be interrupted, the BA device 20-2 will try to reconnect to the respective hearing device 10. This may happen, for example, when a student 30 temporarily leaves the classroom 24 and rejoins it some short time later.

As an alternative to the permanent connection, the BA device 20-2 may only repeatedly, in particular periodically, reconnect to the registered hearing devices 10 to check on their synchronization status and restart synchronization, if needed.

At the end of a lesson, the microphone 50 terminates broadcasting of the audio stream 60, so that the hearing devices 10 can no longer connect to the audio stream 60. The teacher 40 may instruct the BA device 20-2 to perform the 'Remove Source' operation of the BASS with all of the hearing devices 10 that are still within reach in order to avoid that hearing device 10 spend energy in an attempt to resynchronize to the teacher's microphone 50.

Further, at the end of a lesson, the teacher's microphone 50 may be instructed to generate a new encryption key (broadcast code) and/or change its broadcast ID in order to prevent hearing devices 10 that have previously registered for this lesson to accidentally listen to a subsequent lesson they are not part of or to eavesdrop on a subsequent lesson.

The teacher 40 may also request the registration of hearing devices 10 with the classroom 24 to be annihilated at the end of a lesson (e.g., by deleting the list of hearing devices 10 associated with the given class) to avoid that registered hearing devices 10 would automatically be instructed to re-synchronize on the subsequent lesson in the classroom 24. Thereby a lesson-wise registration of the hearing devices 10 can be implemented.

While in the examples illustrated in Figs. 1-4 hearing devices are mentioned as examples for the audio receiver devices, in principle other types of audio receiver devices may be used. Similarly, while in the examples illustrated in Figs. 1-4 wireless microphones are mentioned as examples for the audio source devices, in principle other types of audio source devices may be used.

While in the examples illustrated in Figs. 1-4 a school is mentioned, the invention is applicable to any facility with groups of hearing impaired persons in several rooms.

While in the examples illustrated in Figs. 1-4 a lesson is mentioned, the invention is applicable to any kind of audio session. Similarly, the classroom of the examples of Figs. 1-4 may be any kind of session room.

Further, in all examples bonding information may be used rather than pairing information.

## Claims

1. A method of providing assistive listening to a plurality of users (30) of audio receiver devices (10) configured to receive broadcast Bluetooth LE Audio streams (60), the method comprising:
providing a plurality of audio source devices (50) configured to broadcast Bluetooth LE Audio streams and a plurality of Bluetooth LE Audio Broadcast Assistant devices (20);
providing the Bluetooth LE Audio Broadcast Assistant devices with a common Bluetooth identity;
pairing or bonding each audio receiver device with one of the Bluetooth LE Audio Broadcast Assistant devices to obtain pairing or bonding information;
sharing all pairing or bonding information concerning each audio receiver device that has been obtained by any of the Bluetooth LE Audio Broadcast Assistant devices among the Bluetooth LE Audio Broadcast Assistant devices; and
using one of the Bluetooth LE Audio Broadcast Assistant devices for directing at least one of the audio receiver devices to one of the audio source devices for enabling the audio receiver device to receive a broadcast Bluetooth LE Audio stream from said one of the audio source devices in an audio session.

2. The method of claim 1, wherein the common Bluetooth identity is represented by a common Identity Resolving Key (IRK) or by a common public Bluetooth address.

3. The method of one of claims 1 and 2, wherein the pairing or bonding of each audio receiver device (10) with one of the Bluetooth LE Audio Broadcast Assistant devices (20) occurs on enrollment of the user of the audio receiver device in a user database (12), and wherein the pairing or bonding information of the audio receiver device (10) of a user (30) preferably is associated with metainformation specific to the user, such as the name of the user (30), the association of the user with a certain group of users and type and/or transmit power of the audio receiver device, which is distributed to all Bluetooth LE Audio Broadcast Assistant devices (20) together with the pairing and bonding information.

4. The method of one of the preceding claims, wherein the pairing or bonding information of each audio receiver device (10) is distributed from that one of the Bluetooth LE Audio Broadcast Assistant devices (20) that has been paired or bonded with the respective audio receiver device to the other Bluetooth LE Audio Broadcast Assistant devices via at least one of wireless network transmission, in particular WiFi transmission, file transfer, and a portable device connectable to each Bluetooth LE Audio Broadcast Assistant device, e.g. via USB.

5. The method of one of the preceding claims, wherein before starting an audio session in a session room (24) each audio receiver device (10) of the users (30) attending the audio session is registered by one of the Bluetooth LE Audio Broadcast Assistant devices (20-2) which is located in the session room or by a delegate proximity detection device (28) which is located in the session room.

6. The method of claim 5, wherein the Bluetooth LE Audio Broadcast Assistant device (20-2) located in the session room (24) or the delegate proximity detection device (28) registers each audio receiver device (10) of a user (30) which is found to be present within a proximity zone (26) around the Bluetooth LE Audio Broadcast Assistant device located in the session room or the delegate proximity detection device and which transmits pairing or bonding information to the Bluetooth LE Audio Broadcast Assistant device located in the session room or the delegate proximity detection device which is found to belong to the pairing or bonding information shared by all Bluetooth LE Audio Broadcast Assistant devices.

7. The method of claim 6, wherein the Bluetooth LE Audio Broadcast Assistant device (20-2) located in the session room (24) or the delegate proximity detection device (28) determines whether or not the audio receiver device is in the proximity zone (26) by at least one of:
determining whether or not the RSSI of the Bluetooth Advertisements received from the audio receiver device (10) exceeds an RSSI threshold value;
determining whether or not the RSSI of the Bluetooth Advertisements received from the audio receiver device as a function of time meets with a predefined pattern;
determining whether or not a distance determined by channel sounding is below a given distance threshold; and
determining whether or not a distance determined by triangulation based on reception of Bluetooth Advertisements by multiple antennas of the Bluetooth LE Audio Broadcast Assistant device located in the session room or the delegate proximity detection device is below a given distance threshold.

8. The method of claim 7, wherein the RSSI threshold is a fixed predetermined value or is calculated based on a path loss over the distance threshold of the proximity zone (26) and a value of the transmit power of the audio receiver device (10).

9. The method of one of claims 6 to 8, wherein the delegate proximity detection device (28) communicates information as to which audio receiver devices (10) were found to be present within the proximity zone (26) to the Bluetooth LE Audio Broadcast Assistant device (20-2) located in the session room (24).

10. The method of one of claims 6 to 9, wherein the proximity zone (26) is limited by a configurable distance threshold from the Bluetooth LE Audio Broadcast Assistant device (20-2) located in the session room (24) or the delegate proximity detection device (28) above which the probability of proximity detection is below 10%, or wherein the proximity zone (26) is limited by a distance threshold which is from 10 cm to 100 cm from the Bluetooth LE Audio Broadcast Assistant device (20-2) or the delegate proximity detection device (28).

11. The method of claim 5, wherein each audio receiver device (10) of the users (30) attending the audio session is registered by providing the Bluetooth LE Audio Broadcast Assistant device (20-2) located in the session room (24) with a session specific list of audio receiver devices selected from the user database (12).

12. The method of one of claims 5 to 11, wherein, when an audio session in the session room (24) is started by one of the audio source devices (50) located in the session room starting to broadcast a Bluetooth LE Audio stream (60), the Bluetooth LE Audio Broadcast Assistant device (20-2) located in the session room:
connects with said audio source device and receives the broadcast code and the Broadcast ID of the audio source device from the audio source device, and
connects with the registered audio receiver devices (10), conveys the broadcast code and the Broadcast ID of said audio source device to the registered audio receiver devices, and instructs the registered audio receiver devices to start synchronizing to and rendering the broadcast Bluetooth LE Audio stream of said audio source device.

13. The method of claim 12, wherein the Bluetooth LE Audio Broadcast Assistant device (20-2) located in the session room (24) remains permanently connected to the audio receiver devices (10), or repeatedly reconnects to the audio receiver devices (10), during the streaming of the broadcast Bluetooth LE Audio stream (60) to the audio receiver devices so as to monitor the synchronization state of the audio receiver devices with the audio source device (50).

14. The method of one of claims 5 to 13, wherein, when an audio session in the session room (24) is terminated by the audio source device (50) terminating broadcasting of the Bluetooth LE Audio stream (60), the Bluetooth LE Audio Broadcast Assistant device (20-2) located in the session room takes at least one of the following actions:
performing the "Remove Source" operation of the Broadcast Audio Scan Service with all audio receiver devices (10) still within reach of the Bluetooth LE Audio Broadcast Assistant device located in the session room to avoid that audio receiver devices try to reconnect to the audio source device;
instructing the audio source device to generate a new broadcast code and/or change its Broadcast ID; and
annihilate the registration of the audio receiver devices of the audio session.

15. An assistive listening system comprising:
a plurality of audio source devices (50) for broadcasting Bluetooth LE Audio streams (60),
a plurality of audio receiver devices (10) for receiving broadcast Bluetooth LE Audio streams,
a plurality of Bluetooth LE Audio Broadcast Assistant devices (20), wherein
the Bluetooth LE Audio Broadcast Assistant devices share a common Bluetooth identity,
each audio receiver device is paired or bonded with one of the Bluetooth LE Audio Broadcast Assistant devices,
all Bluetooth LE Audio Broadcast Assistant devices share all pairing or bonding information concerning each audio receiver device that has been obtained by any of the Bluetooth LE Audio Broadcast Assistant devices, and
each of the Bluetooth LE Audio Broadcast Assistant devices is configured to connect at least one of the audio receiver devices with one of the audio source devices for enabling the audio receiver device to receive a broadcast Bluetooth LE Audio stream from said one of the audio source devices in an audio session.
